# EUROPEAN PATENT APPLICATION

(11) **EP 4 040 294 A1**
(43) Date of publication of application: **10.08.2022**
(21) Application number: 20873026.7
(22) Date of filing: 29.09.2020
(51) Int. Cl.: G06F 9/48

(54) **PROCESS SCHEDULING METHOD AND APPARATUS OF VISION SOFTWARE**

(30) Priority: 30.09.2019 CN 201910945499
(71) Applicant: Hangzhou Hikrobot Technology Co., Ltd., Hangzhou, Zhejiang 310051 (CN)
(72) Inventor: SONG, Zhenlong, Hangzhou, Zhejiang 310051 (CN); HU, Jingxiang, Hangzhou, Zhejiang 310051 (CN)
(74) Representative: Epping - Hermann - Fischer
(86) International application number: PCT/CN2020/118736
(87) International publication number: WO 2021/063342

(57) **Abstract**

A process scheduling method and apparatus of vision software, relating to the technical field of machine vision. The method comprises: receiving a process execution instruction (101); reading an inter-process execution order pre-stored in a global script file (102); determining, based on the execution order, a process to be executed from processes associated with the global script file (103); executing the process to be executed (104); and determining, based on the execution order, a next process to be executed from the processes associated with the global script file (105), and returning to execute the process to be executed. By using the method, joint scheduling and control for multiple processes is achieved.

## Description

The present application claims the priority to a Chinese patent application No. 201910945499.6 filed with the China National Intellectual Property Administration on September 30, 2019 and entitled "PROCESS SCHEDULING METHOD AND APPARATUS OF VISION SOFTWARE", which is incorporated herein by reference in its entirety.

### TECHNICAL FIELD

The present application relates to a field of machine vision technology, and in particular, to a method and an apparatus for process scheduling of vision software.

### BACKGROUND

Machine vision technology is a branch of artificial intelligence. In short, machine vision technology is a technology in which machines replace human eyes to carry out measurement and make decisions.

In the field of machine vision technology, a process is a kind of execution process that can be fully or partially automated. A device installed with vision software supports editing and executing of multiple processes. For example, a device installed with vision software may edit an exposure parameter of a module 1 in a process 1, and acquire an image according to the exposure parameter of the module 1 in the process 1. At the same time, the device installed with vision software may edit an image recognition parameter of a module 2 in a process 2, and process the acquired image according to the image recognition parameter of the module 2 in the process 2.

Although the device installed with vision software supports editing and executing of multiple processes, the multiple processes are independent of each other and cannot realize joint scheduling and control for multiple processes.

### SUMMARY

The purpose of embodiments of the present application is to provide a method and an apparatus for process scheduling of vision software, so as to realize joint scheduling and control for multiple processes. The following specific technical solutions are provided.

In a first aspect, an embodiment of the present application provides a process scheduling method of vision software, the method includes:
receiving a process execution instruction;
reading processes and an inter-process execution order pre-stored in a global script file based on the process execution instruction;
determining a process to be executed from processes associated with the global script file based on the execution order;
executing the process to be executed;
determining a next process to be executed from the processes associated with the global script file based on the execution order, and returning to the step of executing the process to be executed.

Optionally, the method further includes:
reading an inter-process execution condition pre-stored in the global script file;
wherein executing the process to be executed includes:
   executing the process to be executed if a current running environment meets the execution condition.

Optionally, the method further includes:
reading relationships between execution results of respective processes and global variable values pre-stored in the global script file;
after executing the process to be executed, obtaining an execution result of the process to be executed;
determining, based on the relationships between the execution results of respective processes and the global variable values, a target global variable value corresponding to the execution result of the process to be executed;
after determining a next process to be executed from the processes associated with the global script file, executing the process to be executed includes:
   executing a process branch corresponding to the target global variable value in the process to be executed.

Optionally, the method further includes:
if the process execution instruction is a circular process execution instruction, returning to the step of reading an inter-process execution order pre-stored in a global script file after all the processes associated with the global script file are executed; stopping returning to the step of reading an inter-process execution order pre-stored in a global script file after receiving a process stop instruction;
if the process execution instruction is a single process execution instruction, stopping a current process scheduling after all the processes associated with the global script file are executed.

Optionally, the method further includes:
receiving an external execution instruction for a target process sent by an external device;
executing the target process.
Optionally, the external execution instruction includes a configuration parameter and a parameter value;
wherein executing the target process includes:
   setting a value of the configuration parameter in the target process as the parameter value and executing the target process with the value set.

Optionally, the global script file includes an execution processing interface, an execution result callback interface, and a communication trigger callback interface. The execution processing interface stores an inter-process execution order and an inter-process execution condition. The execution result callback interface stores relationships between the execution results of respective processes and the global variable values;
the execution processing interface is configured to execute processes associated with the global script file in response to a process execution instruction; the execution result callback interface is configured to callback an execution result; and the communication trigger callback interface is configured to receive an external execution instruction sent by an external device.

Optionally, the global script file is an editable script file, and the vision software is provided with an editing box of the global script file.

Optionally, before receiving a process execution instruction, the method further includes:
loading a scheme file in the vision software, the scheme file includes the global script file and the processes associated with the global script file;
parsing the scheme file to obtain the global script file and the processes associated with the global script file.

In a second aspect, an embodiment of the present application provides a process scheduling apparatus of vision software, the apparatus includes:
a first receiving unit is configured for receiving a process execution instruction;
a first reading unit is configured for reading an inter-process execution order pre-stored in a global script file based on the process execution instruction;
a first determination unit is configured for determining a process to be executed from processes associated with the global script file based on the execution order;
a first execution unit is configured for executing the process to be executed;
the first determination unit is further configured for determining a next process to be executed from the processes associated with the global script file based on the execution order.

Optionally, the first reading unit is further configured for reading an inter-process execution condition pre-stored in the global script file;
the first execution unit is specifically configured for executing the process to be executed if a current running environment meets the execution condition.

Optionally, the apparatus further includes:
a second reading unit is configured for reading relationships between execution results of respective processes and global variable values pre-stored in the global script file;
an acquisition unit is configured for obtaining an execution result of the process to be executed after executing the process to be executed;
a second determination unit is configured for determining, based on the relationships between the execution results of respective processes and the global variable values, a target global variable value corresponding to the execution result of the process to be executed;
the first execution unit is specifically configured for, after determining a next process to be executed from the processes associated with the global script file, executing a process branch corresponding to the target global variable value in the process to be executed .

Optionally, the first reading unit is also configured for:
if the process execution instruction is a circular process execution instruction, reading the inter-process execution order pre-stored in the global script file after the processes associated with the global script file are executed; stop reading the inter-process execution order pre-stored in the global script file after receiving the process stop instruction;
if the process execution instruction is a single process execution instruction, stop the process scheduling after the processes associated with the global script file are executed.

Optionally, the apparatus further includes:
a second receiving unit is configured for receiving an external execution instruction for a target process sent by an external device;
a second execution unit is configured for executing the target process.

Optionally, the external execution instruction includes a configuration parameter and a parameter value;
the second execution unit is specifically configured for setting a value of the configuration parameter in the target process as the parameter value, and executing the target process with the value set.

Optionally, the global script file includes an execution processing interface, an execution result callback interface and a communication trigger callback interface. The execution processing interface stores an inter-process execution order and an inter-process execution condition. The execution result callback interface stores relationships between execution results of respective processes and global variable values;
the execution processing interface is configured to execute processes associated with the global script file in response to a process execution instruction; the execution result callback interface is configured to callback an execution result; and the communication trigger callback interface is configured to receive an external execution instruction sent by an external device.

Optionally, the global script file is an editable script file, and the vision software is provided with an editing box of the global script file.

Optionally, the apparatus further includes:
a loading unit is configured for loading a scheme file in the vision software before receiving the process execution instruction. The scheme file includes the global script file and the processes associated with the global script file;
an parsing unit is configured for parsing the scheme file to obtain the global script file and the processes associated with the global script file.

In a third aspect, an embodiment of the present application provides an electronic device, including a processor, and a machine-readable storage medium, and the machine-readable storage medium stores machine executable instructions that can be executed by the processor. The processor is caused by the machine executable instructions to implement any step of the above process scheduling method of vision software.

In a fourth aspect, an embodiment of the present application provides a machine-readable storage medium, which stores machine executable instructions that can be executed by the processor. The processor is caused by the machine executable instructions to implement any step of the above process scheduling method of vision software.

In a fifth aspect, an embodiment of the present application provides a computer program, wherein, the computer program, when being executed by a processor causes the processor to implement any step of the above process scheduling method of vision software.

In the process scheduling method and apparatus of vision software according to the embodiment of the present application, the global script file is associated with the processes. The inter-process execution order is pre-stored. According to the execution order, respective processes associated with the global script file are executed in sequence to realize the joint scheduling and control for multiple processes.

Of course, the implementation of any product or method of the present application does not necessarily need to achieve all the advantages described above at the same time.

### BRIEF DESCRIPTION OF DRAWINGS

In order to more clearly describe the technical solutions of the embodiments of the present application or of the prior art, drawings that need to be used in embodiments and the prior art will be briefly described below. Obviously, the drawings provided below are for only some embodiments of the present application. Those skilled in the art can also obtain other drawings based on these drawings without any creative efforts.
Fig. 1 is a schematic diagram of a process scheduling method of vision software according to an embodiment of the present application;
Fig. 2 is another schematic diagram of a process scheduling method of vision software according to an embodiment of the present application;
Fig. 3 is another schematic diagram of a process scheduling method of vision software according to an embodiment of the present application;
Fig. 4 is a schematic diagram of an editing box of a global script file according to an embodiment of the present application;
Fig. 5 is another schematic diagram of a process scheduling method of vision software according to an embodiment of the present application;
Fig. 6 is a first schematic diagram of a process scheduling apparatus of vision software according to an embodiment of the present application;
Fig. 7 is a second schematic diagram of a process scheduling apparatus of vision software according to an embodiment of the present application;
Fig. 8 is a schematic diagram of an electronic device according to an embodiment of the present application.

### DETAILED DESCRIPTION

The technical scheme in embodiments of the present application will be clearly and completely described below in combination with the accompanying drawings in the embodiments of the present application. Obviously, the described embodiments are only some, and not all, of the embodiments of the present application. All other embodiments obtained based on the embodiments of the present application by those skilled in the art without any creative efforts fall into the scope of protection defined by the present application.

In the field of machine vision technology, a device installed with vision software supports editing and executing of multiple processes. For example, a device installed with vision software may edit an exposure parameter of a module 1 in a process 1, and acquire an image according to the exposure parameter of the module 1 in the process 1. At the same time, the device installed with vision software may edit an image recognition parameter of a module 2 in a process 2, and process the image according to the image recognition parameter of the module 2 in the process 2. The device installed with vision software can be a robot, a surveillance camera and other device.

Although the device installed with vision software supports editing and executing of multiple processes, the multiple processes are independent of each other. For example, the device installed with vision software has the process 1 and the process 2. The device may only execute the process 1 and the process 2 independently, and obtain an execution result of the process 1 and an execution result of the process 2 respectively, which cannot realize joint scheduling and control for multiple processes.

In order to solve the above problems, an embodiment of the present application provides a process scheduling method of vision software. This method may be applied to a device installed with vision software, such as a robot and a surveillance camera. In the process scheduling method, a global script file is configured, in which an inter-process execution order is pre-stored. According to the execution order, all processes associated with the global script file are executed in sequence to realize the joint scheduling and control for multiple processes.

The execution order of the processes is pre-stored in the global script file, so the processes are processes associated with the global script file.

The process scheduling method of vision software according to the embodiments of the present application is described in detail below through the specific embodiments.

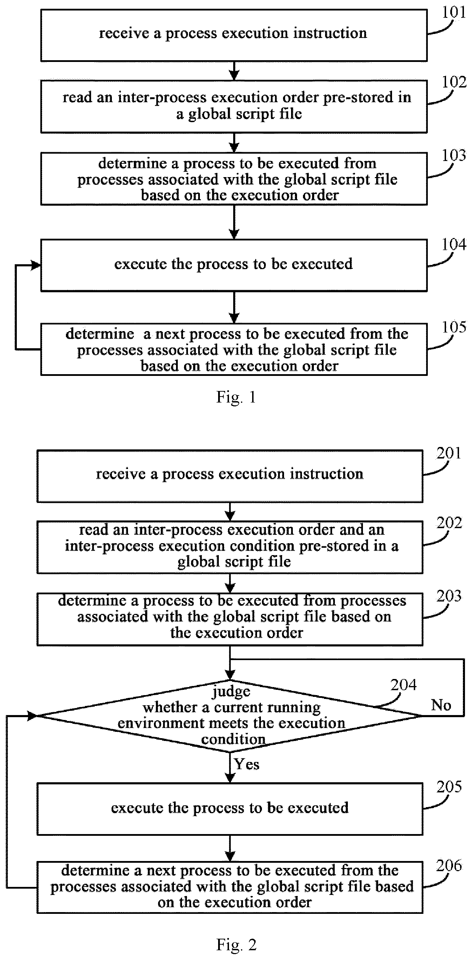

Referring to Fig. 1, Fig. 1 is a schematic diagram of a process scheduling method of vision software according to an embodiment of the present application. For ease of understanding, the following description takes an electronic device as an execution subject, which is not limited to this. The process scheduling method includes the following steps.

Step 101: receive a process execution instruction.

When scheduling and controlling processes of vision software, a user inputs a process execution instruction to an electronic device. The electronic device receives the process execution instruction input by the user.

In an embodiment, a global script file provides an execution control button. When the user clicks the execution control button, a trigger event of the execution control button is triggered. The electronic device generates a process execution instruction in response to the trigger event of the execution control button.

Step 102: read an inter-process execution order pre-stored in a global script file.

After receiving the process execution instruction, the electronic device reads the inter-process execution order pre-stored in the global script file based on the process execution instructi on.

The global script file is configured in the electronic device. The inter-process execution order is pre-stored in the global script file, wherein, the execution order is an execution order among the processes associated with the global script file. The above execution order can be set according to the actual needs.

For example, the processes associated with the global script file include process 1, process 2, and process 3. The execution order pre-stored in the global script file is: process 1, then process 2; and then process 3.

Step 103: determine a process to be executed from the processes associated with the global script file based on the execution order.

The example in step 102 is still used for explanation. The execution order pre-stored in the global script file is: process 1, then process 2, and then process 3. The electronic device determines that process 1 in the processes associated with the global script file is a process to be executed.

Step 104: execute the process to be executed.

Step 105: determine a next process to be executed from the processes associated with the global script file based on the execution order, and return to step 4.

The example in step 103 is still used for explanation. The electronic device determines that process 1 is the process to be executed and execute process 1. Then, the electronic device determines, based on the execution order, a next process to be executed after executing process 1 from the processes associated with the global script file, that is, determines a next process to be executed. As described above, the electronic device can determine that the next process to be executed is process 2, and execute process 2. Repeat the above steps 104 and 105 until all the processes associated with the global script file are executed.

In the process scheduling method of vision software according to the embodiment of the present application, the global script file is associated with the processes. The inter-process execution order is pre-stored in the global script file. According to the execution order, all the processes associated with the global script file are executed in sequence to realize the joint scheduling and control for multiple processes.

In an embodiment of the present application, the above process execution instruction may include a circular process execution instruction and a single process execution instruction. If the process execution instruction is the circular process execution instruction, the electronic device returns to step 102 after all the processes associated with the global script file are executed, re-reads the inter-process execution order pre-stored in the global script file, and circularly executes the processes associated with the global script file. After receiving a process stop instruction, the electronic device stops returning to step 102 and stops reading the inter-process execution order pre-stored in the global script file.

If the process execution instruction is the single process execution instruction, the electronic device stops reading the inter-process execution order pre-stored in the global script file after the processes associated with the global script file are executed, that is, only executes the processes associated with the global script file once, and then ends the current process scheduling.

In an embodiment of the present application, when the electronic device receives the process stop instruction, the electronic device does not return to step 102 after all the processes associated with the global script file are executed. In another embodiment of the present application, when the electronic device receives the process stop instruction, the electronic device stops executing the currently executing process and stops returning to step 102.

In an embodiment, the global script file provides various execution control buttons, such as a single execution control button, a circular execution control button and a stop execution control button.

If the user clicks the single execution control button to trigger a trigger event of the single execution control button, the electronic device generates a single process execution instruction in response to the trigger event of the single execution control button.

If the user clicks the circular execution control button to trigger a trigger event of the circular execution control button, the electronic device generates a circular process execution instruction in response to the trigger event of the circular execution control button. If the user clicks the stop execution control button to trigger a trigger event of the stop execution control button, the electronic device generates a process stop instruction in response to the trigger event of the stop execution control button.

Based on the embodiment shown in Fig. 1, an embodiment of the present application also provides a process scheduling method of vision software. Referring to Fig. 2, Fig. 2 is another schematic diagram of a process scheduling method of vision software according to an embodiment of the present application. For ease of understanding, the following description takes an electronic device as an execution subject, which is not limited to this. The process scheduling method may include the following steps.

Step 201: receive a process execution instruction. Step 201 is the same as step 101.

Step 202: read an inter-process execution order and an inter-process execution condition pre-stored in a global script file.

After receiving the process execution instruction, the electronic device reads the inter-process execution order and the inter-process execution condition pre-stored in the global script file based on the process execution instruction.

In an embodiment of the present application, the inter-process execution order and the inter-process execution condition are pre-stored in the global script file, wherein, the execution order is an execution order among the processes associated with the global script file, and the execution condition is a condition for executing a next process after executing a process. The above execution order and execution condition may be set according to the actual needs.

For example, the execution condition may be that a next process is executed after an execution result of a process is obtained, or the execution condition may be that after the previous process is executed, a next process is executed after waiting for a preset time.

For example, the processes associated with the global script file include process 1, process 2, and process 3. The execution order pre-stored in the global script file is: process 1, then process 2, and then process 3. The execution condition between process 1 and process 2 is that process 2 is executed after the execution result of process 1 is obtained. The execution condition between process 2 and process 3 is that after the process 2 is executed, process 3 is executed after waiting for a preset time.

Based on the execution condition of executing a next process after obtaining an execution result of a process, it can be understood as: executing a current process, determining a next process after obtaining an execution result of the current process, and then updating the determined next process to a current process, so as to execute the current process.

The above execution condition of executing a next process after obtaining an execution result of a process can also be understood as: when a process is the first process indicated by the pre-stored execution order, directly executing the process; when a process is not the first process indicated by the pre-stored execution order, executing the process after obtaining the execution result of the previous process.

Step 203: determine a process to be executed from the processes associated with the global script file based on the execution order. Step 203 is the same as step 103.

The example in step 202 is still used for explanation. The execution order pre-stored in the global script file is process 1, then process 2, and then process 3. The electronic device determines that process 1 in the processes associated with the global script file is the process to be executed.

Step 204: judge whether a current running environment meets the execution condition; if yes, step 205 is executed; if not, continue to judge whether the current running environment meets the execution condition.

After determining the process to be executed, the electronic device judges whether the current running environment meets the execution condition; if yes, the electronic device may determine that the process to be executed can be executed at present; if not, the electronic device may determine that the process to be executed cannot be executed at present, and continue to execute step 204 until the current running environment meets the execution condition.

Step 205: execute the process to be executed.

Step 206: determine a next process to be executed from the processes associated with the global script file based on the execution order, and return to execute step 204.

The example in step 203 is still used for explanation. If the electronic device determines that process 1 is the process to be executed and the current running environment meets the execution condition, process 1 is executed. Then, the electronic device determines, based on the execution order, a next process which needs to be executed after executing process 1 from the processes associated with the global script file, that is determines a next process to be executed. As described above, the electronic device may determine that the next process to be executed is process 2. Then, the electronic device executes step 204 to judge whether the current running environment meets the execution condition. If the execution condition is that after a process is executed, a next process is executed after waiting for a preset time. Then after process 1 is executed, the electronic device determines that the current running environment meets the execution condition after waiting for a preset time, executes process 2, and determines, based on the execution order, a next process which needs to be executed after executing process 2 from the processes associated with the global script file. Repeat the above steps 204-206 until all the processes associated with the global script file are executed.

In the process scheduling method of vision software according to an embodiment of the present application, the global script file is associated with the processes. The inter-process execution order and the inter-process execution condition pre-stored in the global script file. According to the execution order and the execution condition, each of the processes associated with the global script file is executed in sequence to realize the joint scheduling and control for multiple processes.

In an embodiment of the present application, the above process execution instruction may include a circular process execution instruction and a single process execution instruction. If the process execution instruction is the circular process execution instruction, the electronic device returns to step 202 after all the processes associated with the global script file are executed, re-reads the inter-process execution order and the inter-process execution condition pre-stored in the global script file, and circularly executes the processes associated with the global script file. After receiving a process stop instruction, the electronic device stops returning to step 202 and stops reading the inter-process execution order and the inter-process execution condition pre-stored in the global script file.

If the process execution instruction is the single process execution instruction, the electronic device stops reading the inter-process execution order and the inter-process execution condition pre-stored in the global script file after the processes associated with the global script file are executed, that is, only executes the processes associated with the global script file once, and then ends the current process scheduling.

In the embodiment of the present application, the user inputs different process execution instructions to the electronic device based on different process scheduling requirements, and then the electronic device executes the processes associated with the global script file in different ways, so as to meet the diverse process scheduling requirements of the user.

In an embodiment of the present application, in order to facilitate the scheduling of the process, after receiving the process execution instruction, the electronic device may also read relationships between execution results of respective processes and global variable values pre-stored in the global script file. After determining a process to be executed, the electronic device executes the process to be executed and obtains an execution result of the process to be executed. The electronic device determines, based on the read relationships between the execution results of respective processes and the global variable values, a target global variable value corresponding to the execution result of the process to be executed, and sets a global variable as the target global variable value. The global variable is a variable that can be obtained by respective processes.

In this way, when the electronic device executes a next process to be executed after determining the next process to be executed from the processes associated with the global script file, the electronic device may determine a process branch corresponding to the target global variable value in the process to be executed and execute the process branch corresponding to the target global variable value.

For example, global variable value m corresponds to process branch 1 in process 2, and global variable value n corresponds to process branch 2 in process 2. The relationships between the execution results of respective processes and the global variable values include: {execution result 1 of process 1, global variable value m}, {execution result 2 of process 1, global variable value n}.

After executing process 1, if the obtained execution result of process 1 is execution result 1, the electronic device determines, based on the relationships between the execution results of respective processes and the global variable values, a target global variable value corresponding to execution result 1 is m. The electronic device determines that a next process to be executed after executing process 1 is process 2. When executing process 2, process branch 1 in process 2 is executed based on target global variable value m.

After executing process 1, if the obtained execution result of process 1 is execution result 2, the electronic device determines, based on the relationships between the execution results of respective processes and the global variable values, a target global variable value corresponding to execution result 2 is n. The electronic device determines that a next process to be executed after executing process 1 is process 2. When executing process 2, process branch 2 in process 2 is executed based target global variable value n.

For another example, process 11 is to detect and recognize an image and determine whether there is a vehicle in the image. Process 12 is to acquire an image. The pre-stored relationships between execution results of process 11 and the global variable values include: {execution result 11: determining that there is a vehicle in the image, the global variable value: acquisition frequency is 10 frames/second}, {execution result 12: determining that there is no vehicle in the image, the global variable value: acquisition frequency is 4 frames/second}.

After the electronic device executes process 11, if execution result 11 is obtained, that is, it is determined that there is a vehicle in the image, it is determined that a global variable value corresponding to execution result 11 is that: the acquisition frequency is 10 frames/second. Then, the electronic device sets the global variable value of acquisition frequency to 10 frames/second. The electronic device determines a next process to be executed is process 12 after executing process 11. When executing process 12, an image is acquired at an acquisition frequency of 10 frames/second.

If execution result 12 is obtained, that is, it is determined that there is no vehicle in the image, it is determined that a global variable value corresponding to execution result 12 is that: the acquisition frequency is 4 frames/second. Then, the electronic device sets the global variable value of acquisition frequency to 4 frames/second. The electronic device determines a next process to be executed is process 12 after executing process 11. When executing process 12, an image is acquired at an acquisition frequency of 4 frames/second.

In the embodiment of the present application, the global variable value is a variable that can be obtained by respective processes. The data transfer between the processes is realized through the global variable value, which facilitates the joint scheduling for the processes.

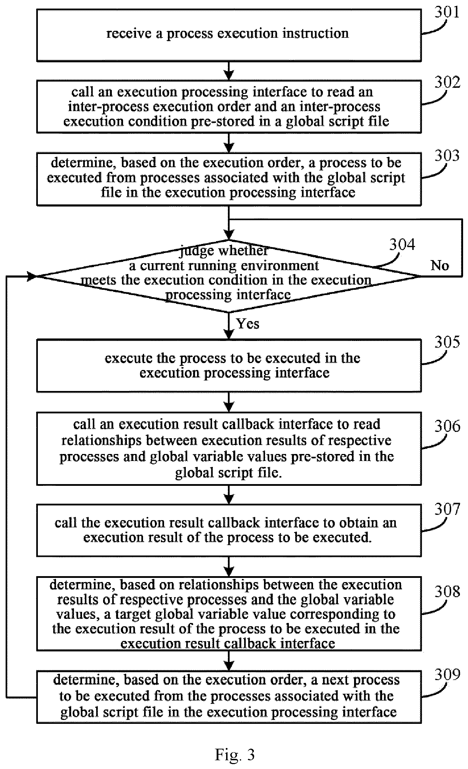

In an embodiment of the present application, in order to facilitate process scheduling and improve the flexibility of process scheduling, the global script file includes an execution processing interface and an execution result callback interface. If the inter-process execution order is pre-stored in the global script file, the inter-process execution order is stored the execution processing interface; if the inter-process execution order and the inter-process execution condition are pre-stored in the global script file, the inter-process execution order and the inter-process execution condition are stored in the execution processing interface. The execution result callback interface stores the relationships between the execution results of respective processes and the global variable values. The execution processing interface is configured to execute the processes associated with the global script file in response to the process execution instruction. The execution result callback interface is configured to callback the execution result. Specifically, referring to Fig. 3, the process scheduling method of vision software based on the global script file, may include the following steps.

Step 301: receive a process execution instruction.

Step 302: call an execution processing interface to read an inter-process execution order and an inter-process execution condition pre-stored in a global script file.

Step 303: determine, based on the execution order, a process to be executed from processes associated with the global script file in the execution processing interface.

Step 304: judge whether a current running environment meets the execution condition in the execution processing interface; if yes, step 205 is executed; if not, continue to judge whether the current running environment meets the execution condition.

Step 305: execute the process to be executed in the execution processing interface.

Step 306: call an execution result callback interface to read relationships between execution results of respective processes and global variable values pre-stored in the global script file.

In the embodiment of the present application, step 306 is executed after step 301. Step 306 may be executed before or after any of steps 302-305.

Step 306 may be executed at any step before step 308. Step 306 may be executed only once, that is, once when steps 301-309 are executed for the first time, and then when respective processes are executed successively based on the execution order, steps 304, 305, 307, 308 and 309 are executed circularly, and step 306 is not executed again. Step 306 may also be executed multiple times, that is, once when steps 301-309 are executed for the first time, and then when respective processes are executed successively based on the execution order, steps 304-309 are executed circularly.

Step 307: call the execution result callback interface to obtain an execution result of the process to be executed.

Step 308: determine, based on the relationships between the execution results of respective processes and the global variable values, a target global variable value corresponding to the execution result of the process to be executed in the execution result callback interface.

Step 309: determine, based on the execution order, a next process to be executed from the processes associated with the global script file in the execution processing interface, and return to execute step 304.

After that, the electronic device circularly executes steps 304-309, or circularly executes steps 304, 305, 307, 308 and 309. If the electronic device determines the global variable value in the last cycle, such as the target global variable value in step 308, in the execution processing interface, when the electronic device executes step 305 again, it may execute a process branch corresponding to the target global variable value determined in the last cycle in the process to be executed.

If the electronic device did not determine the global variable value in the last cycle, in the execution processing interface, when the electronic device executes step 305 again, it may directly execute all process branches of the process to be executed.

The electronic device circularly executes steps 304-309 (or steps 304, 305, 307, 308 and 309) until a next process to be executed cannot be determined from the processes associated with the global script file, that is, all the processes associated with the global script file are executed.

If the above process execution instruction is the circular process execution instruction, after all the processes associated with the global script file are executed, step 302 is re-executed, the execution processing interface is called to read the inter-process execution order and the inter-process execution condition pre-stored in the global script file until the process stop instruction is received. Specifically, when receiving the process stop instruction, the electronic device stops calling the execution processing interface.

The description of the above steps 301-309 is relatively simple. For details, please refer to the above related description.

In an embodiment of the present application, in order to facilitate the user to distinguish different processes, each process may be assigned a number to distinguish different processes by the number. After obtaining the execution results of different processes, the electronic device may distinguish the execution results of different processes by the numbers and output the same to the user for analysis and processing.

In an embodiment of the present application, in order to realize the diversification of process control, the electronic device may receive an external execution instruction for a target process sent by an external device, and execute the target process based on the external execution instruction. The external execution instruction is communication data.

In an embodiment, the external execution instruction may be configured to indicate the electronic device which process to execute. After receiving the external execution instruction, the electronic device executes the respective processes based on the indication of the external execution instruction.

For example, AA corresponds to process 1 and BB corresponds to process 2. If the electronic device obtains AA after parsing the external execution instruction, process 1 is executed. For another example, if the electronic device obtains BB after parsing the external execution instruction, process 2 is executed.

In another embodiment, the external execution instruction may include a configuration parameter and a parameter value. After receiving the external execution instruction, the electronic device sets a value of the configuration parameter in the target process as the parameter value and executes the target process with the value set.

For example, after receiving the external execution instruction, the electronic device obtains "process 1; module 2; exposure parameter: 10000" after parsing the external execution instruction. Therefore, the exposure parameter of module 2 in process 1 is set to 10000 and process 1with the parameter set is executed.

In an embodiment, in order to execute the target process through external execution instruction, the global script file may also include a communication trigger callback interface. The communication trigger callback interface is configured to receive the external execution instruction sent by the external device and call back the received external execution instruction. The external device sends an external execution instruction for the target process to the electronic device. The electronic device receives the external execution instruction for the target process sent by the external device through the communication trigger callback interface, and executes the target process based on the external execution instruction.

In an embodiment of the present application, the external execution instruction may also be configured to realize the functions of the above circular process execution instruction, process stop instruction, single process execution instruction, etc., which is not limited.

In an embodiment of the present application, the external execution instruction sent by the external device may be binary data. After receiving the external execution instruction, the electronic device parses the external execution instruction according to a protocol pre-agreed with the external device, and then controls the execution of the process according to the parsed data. The agreed agreement may be flexibly specified according to the specific application. The embodiment of the present application is not limited to this.

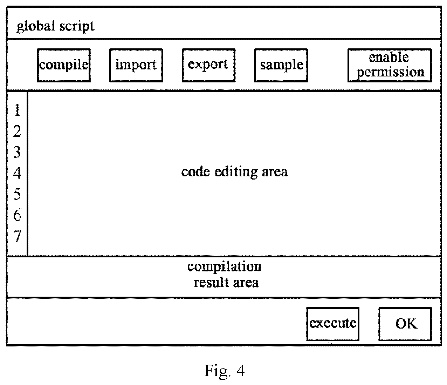

In an embodiment of the present application, the global script file may be edited, that is, the global script file is an editable script file, and the vision software is provided with an editing box of the global script file. The editing box of the global script file is as shown in Fig. 4. In this editing box, the upper part is a code editing area. The code of the global script file may be C# code, Python code, C++ code, etc. Line number of the code is displayed on the left side of the code editing area. Below the code editing area, there is a display area of compilation results, that is, a compilation result area, which is configured to display compilation errors, warnings, etc. A "compile" button supports the compilation of script code. A "import" button supports import of edited code file. A "export" button supports exporting the currently edited code to a file. A "sample" button support to open an edited sample code. A "enable permission" button supports setting a password for opening the editing box. After setting the password, the user must enter the password to open the editing box of the global script file, which improves the security of the global script file. Fig. 4 is an editing box according to an embodiment of the present application. Other form of the editing box may also be used in actual use, which is not limited by the embodiment of the present application.

Based on the editable global script file, the joint scheduling control of multiple processes may be realized by rewriting the execution processing interface, the execution result callback interface and the communication trigger callback interface, etc., in the global script file. When rewriting the execution processing interface and the execution result callback interface, the script code may be called to edit interfaces such as control of a single process, setting of module parameter in the process and acquisition of module parameter in the process, or a secondary development SDK (Software Development Kit) provided by the vision platform may be called. The secondary development SDK provides the interfaces such as single process control, parameter setting of in-process module and parameter acquisition of in-process module.

In an embodiment of the present application, the electronic device may save the global script file and the processes associated with the global script file together as a scheme file. When the electronic device or other electronic devices need to use the global script file to control the processes associated with the global script file, the electronic device or other electronic may directly load the scheme file and parse the scheme file to obtain the global script file and the processes associated with the global script file. There is no need to rewrite the global script file, which improves the efficiency of process scheduling and control.

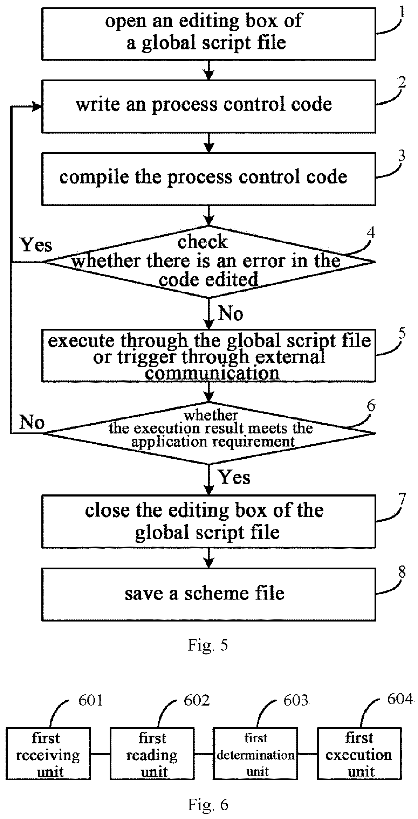

A process scheduling method of vision software according to an embodiment of the present application is described below in combination with Fig. 5.

Step 1: open an editing box of a global script file.

Step 2: write a process control code in a code editing area of the global script file. Specifically, the execution processing interface, the execution result callback interface and the communication trigger callback interface are rewritten in the code editing area.

When rewriting the execution processing interface, the execution result callback interface and the communication trigger callback interface, the electronic device may use the script code to control the execution of a single process and set module parameters in the process. The global script file is provided with the functions of code import and export. When rewriting the execution processing interface, the execution result callback interface and the communication trigger callback interface, the electronic device may also use the secondary development SDK provided by the vision platform to control the execution of a single process and set the module parameters in the process through the secondary development SDK.

Step 3: compile the process control code.

Step 4: check whether there is an error in the code edited. If yes, re-execute step 2. If not, execute step 5.

Step 5: execute respective processes through the global script file or trigger the execution of the respective processes through external communication. The details are as follows:
Executing the respective processes through the global script file includes receiving a click operation of the user on the execution control button of the global script file. When the user clicks a single-time execution control button, the electronic device calls the code in the execution processing interface once to execute respective processes associated with the global script file; when the user clicks a circular execution control button, the electronic device circularly calls the code in the execution processing interface to execute respective processes associated with the global script file; when the user clicks a stop execution control button, the electronic device stops calling the execution processing interface. After the execution processing interface is called, the execution result is called back to the user through the execution result callback interface.

Trigger the execution of the respective processes through external communication includes: after the external device sends communication data to the electronic device, the code in the communication trigger callback interface is called and the respective processes are executed.

For the above two ways of executing processes, in order to avoid mutual influence, in the process of executing the corresponding process by one way of executing the process, it is prohibited to execute the respective processes by another way of executing the process. For example, when the electronic device executes the respective processes according to the communication data sent by the external device, it is prohibited to receive the user's click operation on the execution control button of the global script file.

For the above two ways of executing processes, in order to avoid mutual influence, in the process of executing the corresponding process by one way of executing the process, if the information of executing the respective processes by another way of executing the process is received, an error message will be returned. For example, when the electronic device receives the user's click operation on the execution control button of the global script file and executes the respective processes based on the click operation, if it receives the communication data sent by the external device, it will return the error message to the external device.

Other ways may also be adopted in the embodiment of the present application to deal with the above two execution processes, as long as the two ways do not affect each other.

Step 6: detect, based on the execution result of the process, whether process control logic of the global script file meets an application requirement. If not, repeat step 2 to modify the code in the global script. If yes, execute step 7.

Step 7: close the editing box of the global script file.

Step 8: save the debugged code of the multi-process and global script file as a scheme file. The next time the electronic device is turned on and the vision software is run, loading the scheme file may restore the code of the multi-process and global script file. It is convenient to quickly execute multiple processes and realize the joint scheduling and control for multiple processes.

Based on the above process scheduling method of the vision software, an embodiment of the present application also provides a process scheduling apparatus of vision software. Referring to Fig. 6, Fig. 6 is a schematic diagram of a process scheduling apparatus of vision software according to an embodiment of the present application. The apparatus includes:
a first receiving unit 601 is configured for receiving a process execution instruction;
a first reading unit 602 is configured for reading an inter-process execution order pre-stored in a global script file based on the process execution instruction,;
a first determination unit 603 is configured for determining a process to be executed from processes associated with the global script file based on the execution order;
a first execution unit 604 is configured for executing the process to be executed;
the first determination unit 603 is further configured for determining a next process to be executed from the processes associated with the global script based on the execution order.

Optionally, the first reading unit 602 may also be configured to read an inter-process execution condition pre-stored in the global script file;
the first execution unit 604 may be specifically configured for executing the process to be executed if a current running environment meets the execution condition.

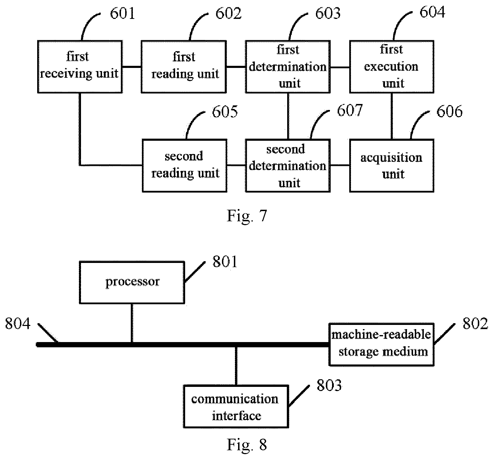

Optionally, referring to Fig. 7, the above process scheduling apparatus of vision software may further include:
a second reading unit 605 is configured for reading relationships between execution results of respective processes and global variable values pre-stored in the global script file;
an acquisition unit 606 is configured for obtaining an execution result of the process to be executed after executing the process to be executed;
a second determination unit 607 is configured for determining, based on the relationships between the execution results of respective processes and the global variable values, a target global variable value corresponding to the execution result of the process to be executed;

In this case, the first execution unit 604 may be specifically configured for, after determining a next process to be executed from the processes associated with the global script file, executing a process branch corresponding to the target global variable value in the process to be executed.

Optionally, the first reading unit 602 may also be configured for:
if the process execution instruction is a circular process execution instruction, reading the inter-process execution order pre-stored in the global script file after the processes associated with the global script file are executed; stop reading the inter-process execution order pre-stored in the global script file after receiving the process stop instruction;
if the process execution instruction is a single process execution instruction, stopping reading the inter-process execution order pre-stored in the global script file.

Optionally, the above process scheduling apparatus of vision software may further include:
a second receiving unit is configured for receiving an external execution instruction for a target process sent by an external device;
a second execution unit is configured for executing the target process.

Optionally, the external execution instruction may include a configuration parameter and a parameter value;
the second execution unit may specifically be configured for setting a value of the configuration parameter in the target process as the parameter value, and executing the target process with the value set.

Optionally, the global script file may include an execution processing interface, an execution result callback interface and a communication trigger callback interface. The execution processing interface stores an inter-process execution order and an inter-process execution condition. The execution result callback interface stores relationships between execution results of respective processes and global variable values;
the execution processing interface is configured for executing a processes associated with the global script file in response to the process execution instruction; the execution result callback interface is configured to callback an execution result; and the communication trigger callback interface is configured to receive an external execution instruction sent by an external device.

Optionally, the global script file is an editable script file, and the vision software is provided with an editing box of the global script file.

Optionally, the above process scheduling apparatus of vision software may further include:
a loading unit is configured for loading a scheme file in the vision software before receiving the process execution instruction. The scheme file includes the global script file and the processes associated with the global script file;
a parsing unit, configured for parsing the scheme file to obtain the global script file and the processes associated with the global script file.

In the process scheduling apparatus of vision software according to an embodiment of the present application, the global script file is associated with the processes. The inter-process execution order is pre-stored in the global script file. According to the execution order, respective processes associated with the global script file are executed in sequence to realize the joint scheduling and control for multiple processes.

According to the above process scheduling method of vision software, an embodiment of the present application also provides an electronic device, as shown in Fig. 8, including a processor 801, and a machine-readable storage medium 802, and the machine-readable storage medium 82 stores machine executable instructions that can be executed by the processor 801. The processor 801 is caused by the machine executable instructions to implement any step of the above process scheduling method of vision software.

In an optional embodiment, as shown in Fig. 8, the electronic device may further include: a communication interface 803 and a communication bus 804; wherein the processor 801, the machine-readable storage medium 802 and the communication interface 803 communication with each other through the communication bus 804, and the communication interface 803 is configured for the communication between the above electronic device and other devices.

According to the above process scheduling method of vision software, an embodiment of the present application also provides a machine-readable storage medium, which stores machine executable instructions that can be executed by the processor. The processor is caused by the machine executable instructions to implement any step of the above process scheduling method of vision software.

According to the above process scheduling method of vision software, an embodiment of the present application also provides a computer program, wherein, the computer program, when being executed by a processor causes the processor to implement any step of the above process scheduling method of vision software.

The above communication bus may be PCI (Peripheral Component Interconnect) bus or EISA (Extended Industry Standard Architecture) bus. The communication bus may be divided into address bus, data bus, control bus, etc.

The above machine-readable storage medium may include RAM (Random Access Memory) or NVM (Non-Volatile Memory), such as at least one disk memory. In addition, the machine-readable storage medium may also be at least one storage device located away from the processor.

The processor may be a general-purpose processor, including CPU (Central Processing Unit), NP (Network Processor), etc.; it can also be DSP (Digital Signal Processing), ASIC (Application Specific Integrated Circuit), FPGA (Field-Programmable Gate Array) or other programmable logic devices, discrete gates or transistor logic devices and discrete hardware components.

It should be noted that, in this description, relational terms such as first, second, and the like are only used to distinguish one entity or operation from another entity or operation without necessarily requiring or implying any actual such relationship or order between such entities or actions. Moreover, the terms "include," "comprise," or any other variation thereof are intended to cover a non-exclusive inclusion, such that a process, method, article, or device, that comprises a list of elements does not include only those elements but may include other elements not expressly listed or inherent to such process, method, article, or device. Without further limitation, an element defined by the phrase "including an ... ..." does not exclude the presence of other identical elements in the process, method, article, or device that comprises the element.

All the embodiments in the description are described in a related manner, and identical or similar parts in various embodiments can refer to one another, and each embodiment focuses on the differences from other embodiments. In particular, as for the system embodiment, the computer-readable storage medium embodiment, and the computer program product embodiment, since it is substantially similar to the method embodiment, the description is relatively simple, and reference may be made to the partial description of the method embodiment for relevant points.

The above description is only for the preferred embodiment of the present application, and is not intended to limit the scope of the present application. Any modification, equivalent replacement, improvement and the like made within the spirit and principle of the present application are included in the scope of protection of the present application.

## Claims

1. A process scheduling method of vision software, comprising:
receiving a process execution instruction;
reading an inter-process execution order pre-stored in a global script file based on the process execution instruction;
determining a process to be executed from processes associated with the global script file based on the execution order;
executing the process to be executed;
determining a next process to be executed from the processes associated with the global script file based on the execution order, and returning to the step of executing the process to be executed.

2. The method according to claim 1, wherein the method further comprises:
reading an inter-process execution condition pre-stored in the global script file;
wherein executing the process to be executed comprises:
executing the process to be executed if a current running environment meets the execution condition.

3. The method according to claim 1, wherein the method further comprises:
reading relationships between execution results of respective processes and global variable values pre-stored in the global script file;
after executing the process to be executed, obtaining an execution result of the process to be executed;
determining, based on the relationships between the execution results of respective processes and the global variable values, a target global variable value corresponding to the execution result of the process to be executed;
after determining a next process to be executed from the processes associated with the global script file, executing the process to be executed comprises:
executing a process branch corresponding to the target global variable value in the process to be executed.

4. The method according to claim 1, wherein the method further comprises:
if the process execution instruction is a circular process execution instruction, returning to the step of reading an inter-process execution order pre-stored in a global script file after all the processes associated with the global script file are executed; stopping returning to the step of reading an inter-process execution order pre-stored in a global script file after receiving a process stop instruction;
if the process execution instruction is a single process execution instruction, stopping a current process scheduling after all the processes associated with the global script file are executed.

5. The method according to claim 1, wherein the method further comprises:
receiving an external execution instruction for a target process sent by an external device;
executing the target process.

6. The method according to claim 5, wherein the external execution instruction comprises a configuration parameter and a parameter value;
wherein executing the target process comprises:
setting a value of the configuration parameter in the target process as the parameter value and executing the target process with the value set.

7. The method according to any of claims 1 to 6, wherein the global script file comprises an execution processing interface, an execution result callback interface, and a communication trigger callback interface, and wherein the execution processing interface stores an inter-process execution order and an inter-process execution condition, the execution result callback interface stores relationships between the execution results of respective processes and the global variable values;
the execution processing interface is configured to execute processes associated with the global script file in response to a process execution instruction; the execution result callback interface is configured to callback an execution result; and the communication trigger callback interface is configured to receive an external execution instruction sent by an external device.

8. The method according to any of claims 1 to 6, wherein the global script file is an editable script file, and the vision software is provided with an editing box of the global script file.

9. The method according to any of claims 1 to 6, wherein before receiving a process execution instruction, the method further comprises:
loading a scheme file in the vision software, wherein the scheme file comprises the global script file and the processes associated with the global script file;
parsing the scheme file to obtain the global script file and the processes associated with the global script file.

10. A process scheduling apparatus of vision software, the apparatus comprises:
a first receiving unit is configured for receiving a process execution instruction;
a first reading unit is configured for reading an inter-process execution order pre-stored in a global script file based on the process execution instruction;
a first determination unit is configured for determining a process to be executed from processes associated with the global script file based on the execution order;
a first execution unit is configured for executing the process to be executed;
the first determination unit is further configured for determining a next process to be executed from the processes associated with the global script file based on the execution order.

11. An electronic device comprising a processor and a machine-readable storage medium, wherein the machine-readable storage medium stores machine executable instructions that can be executed by the processor, the processor is caused by the machine executable instructions to implement steps in the method of any of claims 1 to 9.

12. A machine-readable storage medium having stored therein machine executable instructions, wherein the machine executable instructions can be executed by a processor, the processor is caused by the machine executable instructions to implement steps in the method of any of claims 1 to 9.

13. A computer program, wherein, the computer program, when being executed by a processor, causes the processor to implement steps in the method of any of claims 1 to 9.
